# EUROPÄISCHE PATENTANMELDUNG

(11) **EP 3 095 632 A1**
(43) Veröffentlichungstag der Anmeldung: **23.11.2016**
(21) Anmeldenummer: 16168389.1
(22) Anmeldetag: 04.05.2016
(51) Int. Cl.: B60K 11/04

(54) **KÜHLMODUL IN EINEM KRAFTFAHRZEUG**

(30) Priorität: 20.05.2015 DE 102015209206
(71) Anmelder: Mahle International GmbH, 70376 Stuttgart (DE)
(72) Erfinder: WÄSCH, Artur, 71723 Großbottwar (DE); WEISS, Stefan, 70771 Leinfelden (DE); ANDRITTER, Dirk, 71726 Benningen (DE); WEISE, Stefan, 70469 Stuttgart (DE)
(74) Vertreter: BRP Renaud & Partner mbB Rechtsanwälte Patentanwälte Steuerberater

(57) **Zusammenfassung**

Die Erfindung betrifft ein Kühlmodul (1) in einem Kraftfahrzeug (11) mit zumindest einem Wärmeübertragerblock (2) und zumindest einer Halteeinrichtung (3) zur Halterung an einer Fahrzeugkarosserie (12). Erfindungswesentlich ist dabei, dass die zumindest eine Halteeinrichtung (3) als Gussbauteil ausgebildet ist.

## Beschreibung

Die vorliegende Erfindung betrifft ein Kühlmodul in einem Kraftfahrzeug mit zumindest einem Wärmeübertragerblock und zumindest einer Halteeinrichtung zur Halterung an einer Fahrzeugkarosserie gemäß dem Oberbegriff des Anspruchs 1. Die Erfindung betrifft außerdem ein Kraftfahrzeug mit zumindest einem solchen Kühlmodul.

Aus der DE 100 19 001 A1 ist ein Kühlmodul mit einem Ladeluftkühler und einem Kühlmittelkühler bekannt. Der Ladeluftkühler ist dabei parallel zum Kühlmittelkühler angeordnet. Die Ladeluftkästen des Ladeluftkühlers sind an ihren Enden bis zu den Kühlmittelkästen des Kühlmittelkühlers verlängert und unmittelbar mit den Kühlmittelkästen verschraubt. Die Ladeluftkästen des Ladeluftkühlers und die Kühlmittelkästen des Kühlmittelkühlers bilden auf diese Weise einen stabilen Tragrahmen für das gesamte Kühlmodul, der sich einfach im Fahrzeug verankern lassen soll.

Für die Anbindung von Kühlmodulen an Fahrzeugkarosserien eines Kraftfahrzeuges werden in der Regel sogenannte Modulhalter verwendet, die fest mit einem U-förmigen Stahlprofil verbunden sind, welches wiederum das Kühlmodul oder einzelne Teile davon umschließt. Die für die anwendungsgerechte Lagerung des Kühlmoduls notwendigen Bauteile umfassen zwei Stahlabdeckungen als U-Profile mit Ausstanzungen für die Kühlluftströmung, Haupt-Modulhalter mit Isolatoren aus Gummi und Pendelstützen zur Abstützung von Momenten aufgrund von Trägheitsoder Reaktionskräften sowie notwendige Befestigungselemente. Die U-förmigen Stahlprofile weisen dabei oftmals eine Dicke von ca. 2,5 mm auf und werden aus Coil- oder Platinenmaterial in mehreren Stanz- und Umformschritten hergestellt. Um Schäden durch Korrosion zu vermeiden, müssen diese Stahlprofile üblicherweise in einem geeigneten Verfahren beschichtet, zum Beispiel kathodisch tauchlackiert, werden.

Nachteilig bei den aus dem Stand der Technik bekannten Stahlprofilen ist jedoch, dass diese aus einem Wandmaterial mit konstanter Wandstärke hergestellt werden und dadurch nicht oder nur sehr begrenzt durch eine lokale Formänderung auf lokale Spannungsspitzen angepasst werden können. Die Steifigkeit der U-förmigen Stahlprofile wird dabei durch die Schenkelhöhe und die Materialdicke beeinflusst. Die Forderung nach einer ungestörten Anströmung der Kühlerfläche erfordert dabei jedoch Ausstanzungen in den Schenkeln des U-förmigen Stahlprofils, was wiederum zu einem relativ großen Verschnitt und einer ineffizienten Ausnutzung des Grundmaterials führt. Der stets erforderliche Korrosionsschutz kann darüber hinaus nur in einem weiteren Prozess aufgebracht werden, wodurch sich die Kosten wiederum erhöhen.

Die vorliegende Erfindung beschäftigt sich daher mit dem Problem, für ein Kühlmodul der gattungsgemäßen Art, eine verbesserte oder zumindest eine alternative Ausführungsform anzugeben, die sich insbesondere durch eine kostengünstigere Herstellungsweise auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Halteeinrichtung zur Halterung eines Kühlmoduls an einer Fahrzeugkarosserie eines Kraftfahrzeuges nicht wie bisher als umständlich und teuer herzustellendes Stahlprofil auszubilden, sondern erstmals als Gussbauteil, wodurch sich die Möglichkeit eröffnet, das Kühlmodul nicht nur kostengünstig, sondern auch optimiert im Hinblick auf die auf die Halteeinrichtung einwirkenden Kräfte auszuführen. Durch die erfindungsgemäße Ausbildung der Halteeinrichtung als Gussbauteil ist es auch möglich, sämtliche bisher separaten Bauteile einer solchen Halteeinrichtung, wie beispielsweise das U-Profil, Halter für Pendelstützen sowie zusätzliche Anschraubpunkte, nunmehr erstmals in ein einziges Bauteil zu integrieren, wodurch nicht nur die bisher aufwändige, da separate, Fertigung der einzelnen Bauteile entfallen kann, sondern zudem auch deren vergleichsweise kostenintensive Montage. Mittels der erfindungsgemäßen als Gussbauteil ausgebildeten Halteeinrichtung können auch lokale Dickenänderungen vergleichsweise einfach realisiert werden, wodurch die Halteeinrichtung individuell auf die darauf einwirkenden Kräfte anpassbar ist. Verstärkt werden kann dieser Effekt beispielsweise durch integral mit der Halteeinrichtung ausgebildete bzw. gegossene Aussteifungsrippen, welche mit vergleichsweise geringem Gewicht eine belastungsgerechte Ausgestaltung der Halteeinrichtung ermöglichen.

Bei einer vorteilhaften Weiterbildung der erfindungsgemäßen Lösung ist die zumindest eine Halteeinrichtung als Aluminiumgussbauteil ausgebildet. Durch die Verwendung eines Aluminiumwerkstoffes kann auf eine bisher erforderliche, separat aufzubringende Korrosionsschutzschicht, beispielsweise mittels kathodischem Tauchlackieren gänzlich verzichtet werden, was ebenfalls zu einer Reduzierung der Herstellungskosten beiträgt. Alternativ kann die zumindest eine Halteeinrichtung auch als Kunststoffspritzgussbauteil ausgebildet sein. Dies stellt eine nochmals gewichtsoptimierte Lösung dar, die zudem äußerst kostengünstig ist. Bezüglich eines Korrosionsschutzes ist ein Kunststoffspritzgussbauteil besonders vorteilhaft.

Bei einer vorteilhaften Weiterbildung der erfindungsgemäßen Lösung weist zumindest eine Halteeinrichtung zumindest eine erste Anbindungslasche zur Anbindung an die Fahrzeugkarosserie auf. Eine derartige erste Anbindungslasche kann beispielsweise eine Durchgangsöffnung und damit einen Anschraubpunkt besitzen. In gleicher Weise kann selbstverständlich auch eine zweite Anbindungslasche zur Anbindung an eine Pendelstütze vorgesehen sein, welche wiederum eine Durchgangsöffnung aufweisen kann, über welche die Pendelstütze einfach angeschraubt werden kann. Von besonderem Vorteil der erfindungsgemäß als Gussbauteil ausgebildeten Halteeinrichtung ist dabei, dass die Anzahl und Orientierung sowie Ausgestaltung der einzelnen Anbindungslaschen einfach durch eine entsprechende Ausbildung der Gussform realisierbar ist, und zwar unabhängig davon, ob die Halteeinrichtung als metallisches Gussbauteil oder als Kunststoffspritzgussbauteil ausgebildet ist. Im Vergleich zu einer bisher als U-förmiges Stahlprofil ausgebildeten Halteeinrichtung können bei der erfindungsgemäßen Halteeinrichtung die Anbindungslaschen auch in nahezu beliebiger Winkelstellung angeordnet werden. Hierdurch ist eine besonders flexible und belastungsgerechte Ausbildung der Halteeinrichtung möglich.

Bei einer weiteren vorteilhaften Ausbildungsform der erfindungsgemäßen Lösung weist das Kühlmodul einen Kühlmittelkühler auf, bei welchem zugehörige Kühlmittelsammelkästen zumindest teilweise aus Kunststoff ausgebildet sind. Hierdurch ist es möglich, einen Teil des Kühlmittelkühlers vergleichsweise kostengünstig, insbesondere in der Art eines Kunststoffspritzgussteils, herzustellen, wodurch ebenfalls eine Kostenreduzierung erreicht werden kann.

Bei einer vorteilhaften Weiterbildung der Erfindung ist das Kühlmodul als direkter Ladeluftkühler ausgebildet und weist einen Hochtemperatur-Kühlmittelkühler auf, oder das Kühlmodul ist als indirekter Ladeluftkühler ausgebildet und weist sowohl einen Hochtemperatur-Kühlmittelkühler als auch einen Niedertemperatur-Kühlmittelkühler auf. Die zuvor genannten Möglichkeiten zeigen bereits, dass die erfindungsgemäß als Gussbauteil ausgebildete Halteeinrichtung an sich nicht auf einen bestimmten Typ eines Kühlermoduls beschränkt sein muss, sondern für unterschiedlichste Ausführungsformen eines Kühlmoduls bzw. Kühlers eingesetzt werden kann.

Zweckmäßig weist die zumindest eine Halteeinrichtung integral ausgebildete Aussteifungsrippen auf. Hierdurch ist es möglich, das Widerstandsmoment der Halteeinrichtung auf die Anforderungen im Fahrbetrieb anzupassen und dadurch die dort auftretenden Beschleunigungen und Reaktionskräfte optimal aufnehmen zu können. Die Aussteifungsrippen lassen sich dabei durch eine entsprechende Ausgestaltung der Gussform vergleichsweise einfach und kostengünstig realisieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine erste Ansicht auf ein erfindungsgemäßes Kühlmodul in einem Kraftfahrzeug mit einer erfindungsgemäß als Gussbauteil ausgebildeten Halteeinrichtung,
- Fig. 2: eine Darstellung wie in Fig. 1 jedoch aus einer anderen Perspektive,
- Fig. 3: eine Ansicht auf die erfindungsgemäße Halteeinrichtung,

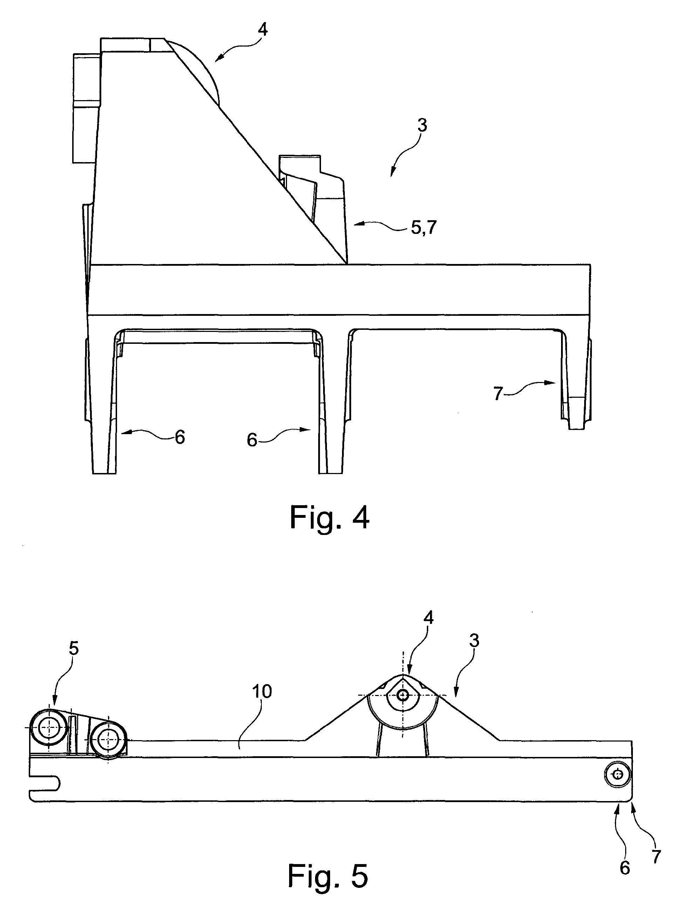

- Fig. 4, 5: weitere Ansichten auf die erfindungsgemäße Halteeinrichtung.

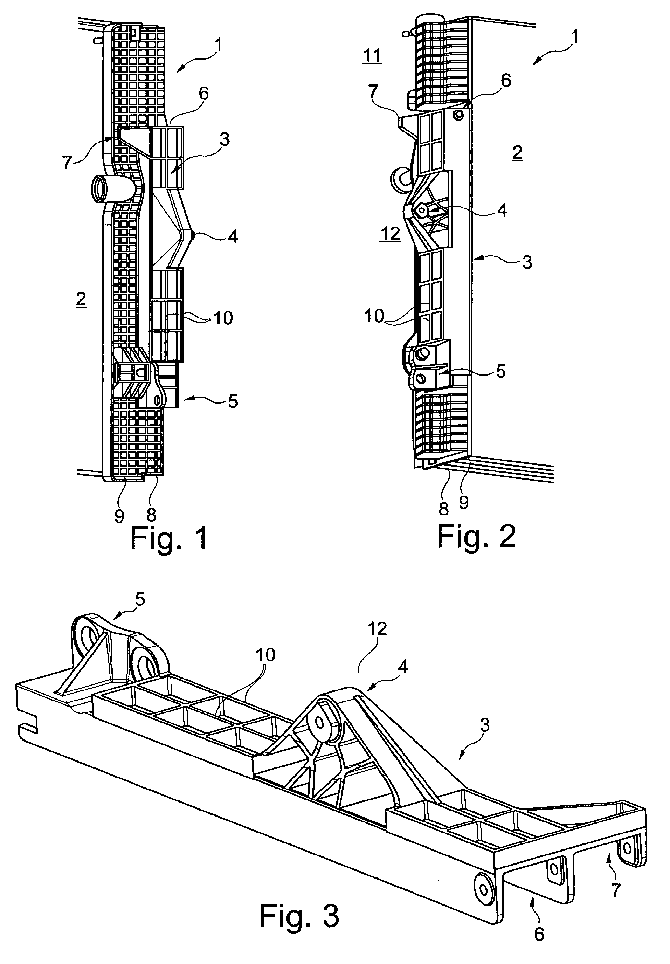

Entsprechend den Figuren 1 und 2, weist ein erfindungsgemäßes Kühlmodul 1, welches beispielsweise in einem Kraftfahrzeug 11 eingebaut sein kann, zumindest einen Wärmeübertragerblock 2 sowie zumindest eine Halteeinrichtung 3 zur Halterung an einer in Fig. 2 nur stark schematisiert dargestellten Fahrzeugkarosserie 12 auf. Erfindungsgemäß ist nun diese Halteeinrichtung 3 als Gussbauteil, insbesondere als Aluminiumgussbauteil oder als Kunststoffspritzgussbauteil, ausgebildet. Dies eröffnet im Vergleich zu einer bisher aus einem gestanzten und umgeformten Stahlprofil hergestellten Halteeinrichtung die große Möglichkeit, die Halteeinrichtung 3 nicht nur kostengünstiger, sondern insbesondere auch optimiert auf die im Betriebszustand aufzunehmenden Belastungen auszubilden. So ist es beispielsweise möglich, mehrere Bauteile, wie beispielsweise unterschiedlichste Anbindungslaschen 4, 5, 6, 7 einstückig mit der Halteeinrichtung 3 auszubilden, wodurch die bislang erforderliche separate Fertigung sowie die anschließende Montage entfallen können. Über eine erste Anbindungslasche 4 kann dabei eine Anbindung an die Fahrzeugkarosserie 12 erfolgen, wogegen über eine zweite Anbindungslasche 5 beispielsweise eine Anbindung an eine nicht gezeigte Pendelstütze zum Ausgleich von Querbeschleunigungskräften erfolgen kann.

Dabei kann die Halteeinrichtung 3 als materialeinheitliches, einstückiges Kunststoffspritzgussteil ausgebildet sein oder aber als Kunststoffspritzgussteil mit zumindest einem eingespritzten Einlegeteil, insbesondere eingespritzten Bewehrungselementen, wie Glasfasern/Kohlefasern oder einem eingespritzten Aluminium-Gussteil, beispielsweise einer Gewinde-Buchse. Hierdurch ist es möglich, höher belastbare Funktionsbauteile, wie beispielsweise Gewinde, Ösen, Buchsen, etc. einfach aber dennoch zuverlässig in die Halteeinrichtung 3 zu integrieren. In diesem Fall ist die Halteeinrichtung 3 also als Kompositbauteil ausgebildet. Generell kann das erfindungsgemäße Kühlmodul 1 einen Hochtemperatur-Kühlmittelkühler 9 sowie einen Niedertemperatur-Kühlmittelkühler 8 aufweisen. Alternativ kann das Kühlmodul 1 auch einen direkten Ladeluftkühler aufweisen und nur einen Hochtemperatur-Kühlmittelkühler 9. Zur Anbindung an den Hochtemperatur-Kühlmittelkühler 9 kann an der Halteeinrichtung 3 zumindest eine dritte Anbindungslasche 6 vorgesehen sein, wogegen zur Anbindung der Halteeinrichtung 3 an den Niedertemperatur-Kühlmittelkühler 8 eine vierte Anbindungslasche 7 vorgesehen sein kann.

Um die im Betriebszustand auftretenden und insbesondere durch die Halteeinrichtung 3 aufzunehmenden Kräfte optimal übertragen zu können, kann die zumindest eine Halteeinrichtung 3 integral ausgebildete Aussteifungsrippen 10 (vgl. insbesondere die Fig. 1 bis 3) aufweisen, wobei die Ausrichtung und auch die Stärke der Aussteifungsrippen 10 an die jeweils individuell in diesem Bereich auftretenden Belastungen angepasst sein kann. Die Aussteifungsrippen 10 können dabei durch eine entsprechende Gussform vergleichsweise einfach realisiert werden.

Vorzugsweise ist die zumindest eine Halteeinrichtung 3 als Aluminiumgussbauteil oder als Kunststoffspritzgussbauteil ausgebildet, wodurch sich ein bislang erforderlicher und aufwändig aufzubringender Korrosionsschutz, beispielsweise mittels einer kathodischen Tauchlackierung, entfallen kann. Hierdurch kann die erfindungsgemäße Halteeinrichtung 3 und damit auch das erfindungsgemäße Kühlmodul 1 kostengünstiger hergestellt werden.

Bei einer weiteren vorteilhaften Ausbildungsform der erfindungsgemäßen Lösung weist das Kühlmodul 1 einen Kühlmittelkühler auf, beispielsweise einen Niedertemperatur-Kühlmittelkühler 8, bei welchem zugehörige Kühlmittelsammelkästen zumindest teilweise aus Kunststoff ausgebildet sind. Hierdurch ist es möglich, einen Teil des Kühlmittelkühlers vergleichsweise kostengünstig, insbesondere in der Art eines Kunststoffspritzgussteils, herzustellen, wodurch ebenfalls eine Kostenreduzierung erreicht werden kann.

Durch die erfindungsgemäß als Gussbauteil ausgebildete Haltereinrichtung 3 können somit nicht nur Vorteile hinsichtlich des Korrosionsschutzes erzielt werden, sondern auch unterschiedlichste Schnittstellen zur Anbindung in die Halteeinrichtung 3 in vergleichsweise einfacher Weise integriert werden. Die Schnittstellen sind dabei die entsprechenden Anbindungslaschen 4 bis 7. Die erfindungsgemäße Halteeinrichtung 3 ermöglicht darüber hinaus eine vereinfachte Herstellung und kann für sämtliche Arten von Kühlmodulen 1, insbesondere auch mit NT-/HT-Kühlmittelkühlern 8,9, beispielsweise auch Ladeluftkühlern, eingesetzt werden.

Selbstverständlich kann die erfindungsgemäße Halteeinrichtung 3 auch als Einzelteil angeboten werden, insbesondere für Reparaturfälle. Durch die Aussteifungsrippen 10 kann auch eine spezielle belastungsgerechte Aussteifung, insbesondere der Anbindungslaschen 4 bis 7 bei gleichzeitig vergleichsweise geringem Gewicht erreicht werden.

## Patentansprüche

1. Kühlmodul (1) in einem Kraftfahrzeug (11) mit zumindest einem Wärmeübertragerblock (2) und zumindest einer Halteeinrichtung (3) zur Halterung an einer Fahrzeugkarosserie (12),
**dadurch gekennzeichnet,**
**dass** die zumindest eine Halteeinrichtung (3) als Gussbauteil ausgebildet ist.

2. Kühlmodul nach Anspruch 1,
**dadurch gekennzeichnet,**
- **dass** die zumindest eine Halteeinrichtung (3) als Aluminiumgussbauteil ausgebildet ist, oder
- **dass** die zumindest eine Halteeinrichtung (3) als Kunststoffspritzgussbauteil ausgebildet ist.

3. Kühlmodul nach Anspruch 1 oder nach Anspruch 2, zweite Alternative,
**dadurch gekennzeichnet,**
- **dass** die Halteeinrichtung (3) als materialeinheitliches Kunststoffspritzgussteil ausgebildet ist, oder
- **dass** die Halteeinrichtung (3) als Kunststoffspritzgussteil mit zumindest einem eingespritzten Einlegeteil, insbesondere eingespritzten Bewehrungselementen, wie Glasfasern/Kohlefasern oder einem eingespritzten Aluminium-Gussteil, beispielsweise einer Gewinde-Buchse, ausgebildet ist.

4. Kühlmodul nach einem der vorhergehenden Ansprüche,
**dadurch gekennzeichnet,**
**dass** die zumindest eine Halteeinrichtung (3) zumindest eine erste Anbindungslasche (4) zur Anbindung an die Fahrzeugkarosserie (12) aufweist.

5. Kühlmodul nach einem der vorhergehenden Ansprüche,
**dadurch gekennzeichnet,**
**dass** die zumindest eine Halteeinrichtung (3) zumindest eine zweite Anbindungslasche (5) zur Anbindung an eine Pendelstütze aufweist.

6. Kühlmodul nach einem der vorhergehenden Ansprüche,
**dadurch gekennzeichnet,**
- **dass** das Kühlmodul (1) einen direkten Ladeluftkühler und einen Hochtemperatur-Kühlmittelkühler (9) aufweist, oder
- **dass** das Kühlmodul (1) einen Hochtemperatur-Kühlmittelkühler (9) und einen Niedertemperatur-Kühlmittelkühler (8) aufweist.

7. Kühlmodul nach Anspruch 6,
**dadurch gekennzeichnet,**
- **dass** die zumindest eine Halteeinrichtung (3) zumindest eine dritte Anbindungslasche (6) zur Anbindung an den Hochtempertatur-Kühlmittelkühler (9) aufweist, und/oder
- **dass** die zumindest eine Halteeinrichtung (3) zumindest eine vierte Anbindungslasche (7) zur Anbindung an den Niedertempertatur-Kühlmittelkühler (8) aufweist.

8. Kühlmodul nach einem der vorhergehenden Ansprüche,
**dadurch gekennzeichnet,**
**dass** die zumindest eine Halteeinrichtung (3) integral ausgebildete Aussteifungsrippen (10) aufweist.

9. Kraftfahrzeug (11) mit zumindest einem Kühlmodul (1) nach einem der vorhergehenden Ansprüche.
